# EUROPEAN PATENT SPECIFICATION

(11) **EP 1 707 851 B1**
(45) Date of publication and mention of the grant of the patent: **17.09.2008**
(21) Application number: 06006415.1
(22) Date of filing: 28.03.2006
(51) Int. Cl.: F16H 55/56, F16H 9/18

(54) **Continuously variable transmission**
Stufenlos regelbares Getriebe
Transmission à variation continue

(30) Priority: 30.03.2005 JP 2005096868
(43) Date of publication of application: 04.10.2006
(73) Proprietor: Fuji Jukogyo Kabushiki Kaisha, Tokyo (JP)
(72) Inventor: Uwabo, Masahiro Fuji Jukogyo Kabushiki Kaisha, Tokyo (JP)
(74) Representative: Vossius & Partner

(56) References cited:
- EP-A- 1 357 314
- US-A- 5 628 700
- PATENT ABSTRACTS OF JAPAN vol. 1996, no. 05, 31 May 1996 (1996-05-31) -& JP 08 014348 A (AICHI MACH IND CO LTD; others: 01), 16 January 1996 (1996-01-16)

## Description

The present invention relates to a continuously variable transmission having a stopper structure capable of controlling a portion of application of force acting between a plunger, which makes up an actuator together with a movable pulley, and a stopper member for restricting the axial movement of the plunger, corresponding to the preamble of claim 1.

A belt type continuously variable transmission is so structured that a belt, i.e., a power transmission element, is wound around a primary pulley (driving pulley) consisting of a fixed pulley and a movable pulley and a secondary pulley (driven pulley) similarly consisting of a fixed pulley and a movable pulley. The arrangement provided is such that as the pulley groove width for the winding around of the belt is varied by moving the respective movable pulley in the direction in which it approaches or moves away from the fixed pulley by a hydraulic actuator juxtaposed to the respective movable pulley, the belt winding diameters of the primary pulley and the secondary pulley are varied to steplessly vary the gear ratio.

With such a belt type continuously variable transmission, a stopper (fixing) structure for a plunger is conventionally adopted in which a threaded groove is provided in an end portion of a shaft on which a plunger portion of the actuator for moving the movable pulley of the secondary pulley is mounted, and a nut is threadedly engaged with this threaded groove, so as to restrict the axial movement of the plunger by means of this nut. Further, disclosed in the closest prior and document JP-A-08-014348 is a stopper structure for a plunger for overcoming the various problems in terms of the machining, assembly management, cost, and dimensions of this stopper structure, a stopper structure. In the stopper structure, for instance, a ring groove is provided at an end portion of the shaft, and a ring member is fitted in this ring groove.

With the above-described stopper structure for a plunger, as compared with the stopper structure in which the nut is threadedly engaged with the threadedgroove, machining is simple, and the continuously variable transmission can be assembled simply by a simple assembly operation. For this reason, the above-described stopper structure for a plunger excels in that the machining and assembly costs can be reduced substantially and that the axial length can be set to a short dimension. However, it was found by the present inventor that a new problem arises with the structure in which the ring groove for fitting is provided in the shaft, and the ring member is fitted in this ring groove, since a gap (an unavoidable gap), slight as it may be, is present between the ring groove and the ring member.

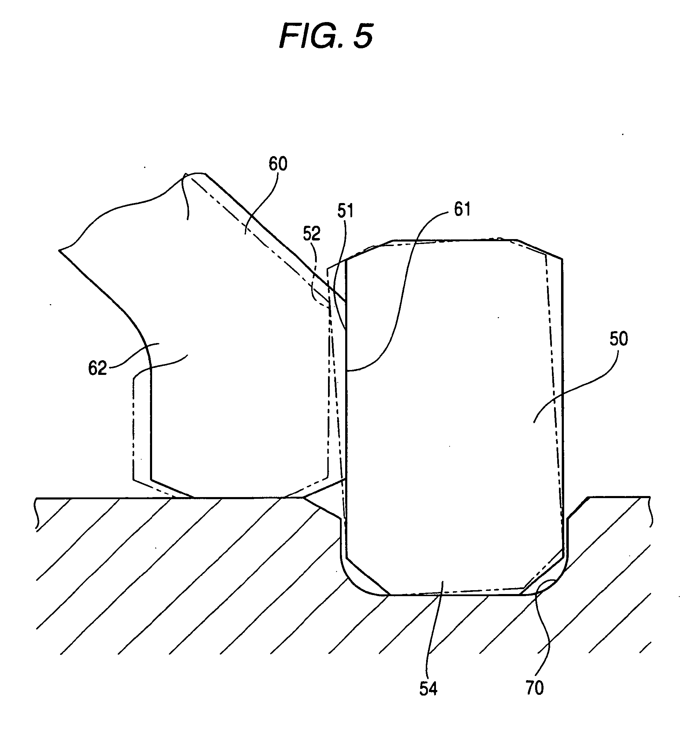

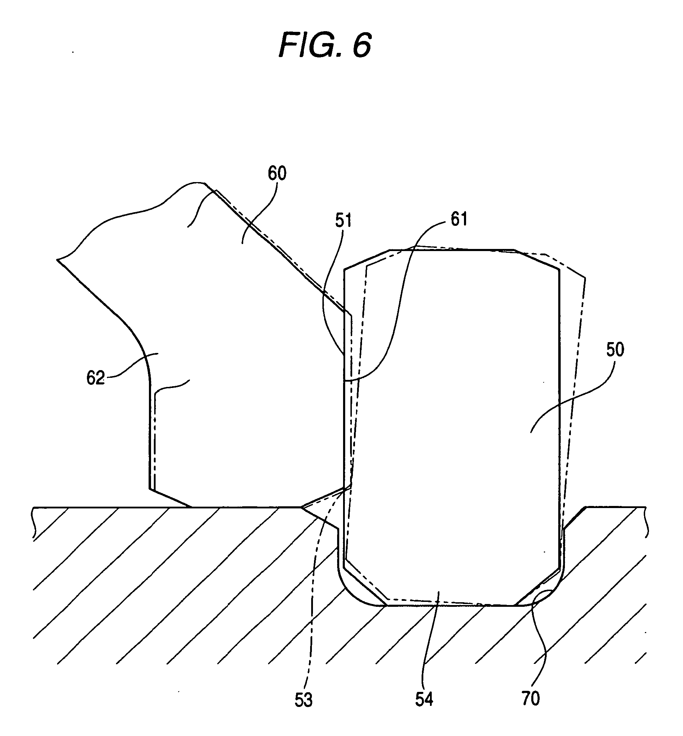

For example, as shown in Fig. 5 or 6, a ring member 50 at its vertical flat surface 51 is brought into contact with a similarly vertical flat surface 61 in the vicinity of an inside portion of a plunger 60, and receives the force (load) from the plunger 60. Meanwhile, a reaction force is applied from the ring member 50 to the plunger 60 so as to restrict the axial movement of the plunger 60 (see the solid line portions in Fig. 5 or 6). However, owing to the presence of the aforementioned gap, there are cases where the ring member 50 tilts (swings) inside a ring groove 70, as indicated by the two-dot chain lines in Fig. 5 or 6. As a result, the portion of application of the reaction force from the ring member 50 to the plunger 60 is not fixed and changes. For example, in the case shown in Fig. 5, the reaction force is applied from a portion 52 of the flat surface 51 of the ring member 50, which portion 52 being distant from the ring groove 70, to the flat surface 61 of the plunger 60, as indicated by the two-dot chain lines in the drawing. Owing to this reaction force, a bending moment with an inside portion 62 of the plunger 60 serving as a fulcrum occurs, and a stress concentration occurs in this inside portion 62. In addition, in the case shown in Fig. 6, the reaction force is applied from a portion 53 of the flat surface 51 of the ring member 50, which portion 53 being close to the ring groove 70, to the flat surface 61 of the plunger 60, as indicated by the two-dot chain lines in the drawing. Owing to this reaction force, a bending moment with the inside portion 62 of the plunger 60 serving as a fulcrum occurs, and a stress concentration occurs in this inside portion 62. Although the strength design of the plunger 60 is made to be able to withstand the stress concentration which occurs repeatedly in its inside portion 62, since the portion of contact with the ring member 50 is not fixed, as described above, the magnitude of the bending moment which occurs changes. For this reason, it has been necessary to undertake the strength design of the plunger 60 by using as a reference the largest bending moment which occurs and so as to withstand it (the setting of an allowable stress value).

In addition, a bending moment similarly occurs with the ring member 50 as well, and the magnitude of the bending moment which occurs changes depending on the portion of contact with the plunger 60. For example, in the case shown in Fig. 5, the reaction force is applied from the portion 52 of the ring member 50, which portion 52 being distant from the ring groove 70, to the flat surface 61 of the plunger 60, as described above. However, at this time, a relatively large bending moment occurs in the ring member 50 by using as its fulcrum a base portion 54 of the ring member 50 fitted in the ring groove 70. In addition, in case shown in Fig. 6, the reaction force is applied from the portion 53 of the ring member 50, which portion 53 being close to the ring groove 70, to the flat surface 61 of the plunger 60, as described above. However, at this time, a relatively small bending moment occurs in the ring member 50 by using as its fulcrum the base portion 54 of the ring member 50 fitted in the ring groove 70. For this reason, it has been necessary to undertake the strength design of the ring member 50 by using as a reference the largest bending moment and so as to withstand it (the setting of an allowable stress value).

Furthermore, since the ring member 50 is subjected to repeated load from the plunger 60, the ring member 50 is formed of a material having relatively high rigidity so as to be provided with strength. Meanwhile, in the case of the ring groove 70, the strength (hardness) of its surface cannot be made very high in the light of the fact that the ring groove 70 is formed by cutting work or the like. Hence, as the ring member 50 is repeatedly tilted (is swung) in the ring groove 70, there is a possibility of the inner surface of the ring groove 70 becoming shaved, further enlarging the gap between the ring member 50 and the ring groove 70. As this gap is enlarged, the portion of contact between the ring member 50 and the plunger 60 tends to further change, so that it has been necessary to take such a factor of uncertainty into consideration in the strength design of the plunger 60 and the ring member 50.

One or more embodiments of the present invention provide a continuously variable transmission which has a stopper structure for a plunger, and which is capable of reducing or maintaining to a fixed level the magnitude of the bending moment occurring in the plunger and the ring member (stopper member) and of reducing or alleviating a stress concentration by controlling the portion of application of the reaction force (load) applied to the plunger from the ring member (stopper member).

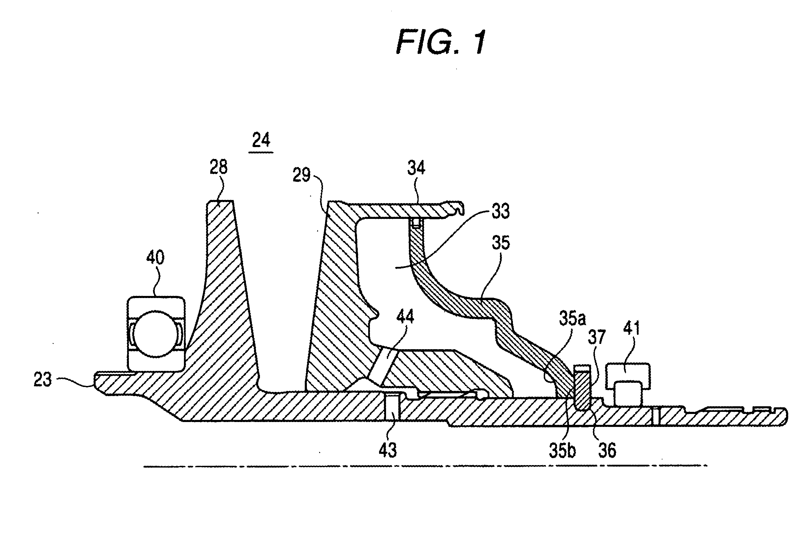

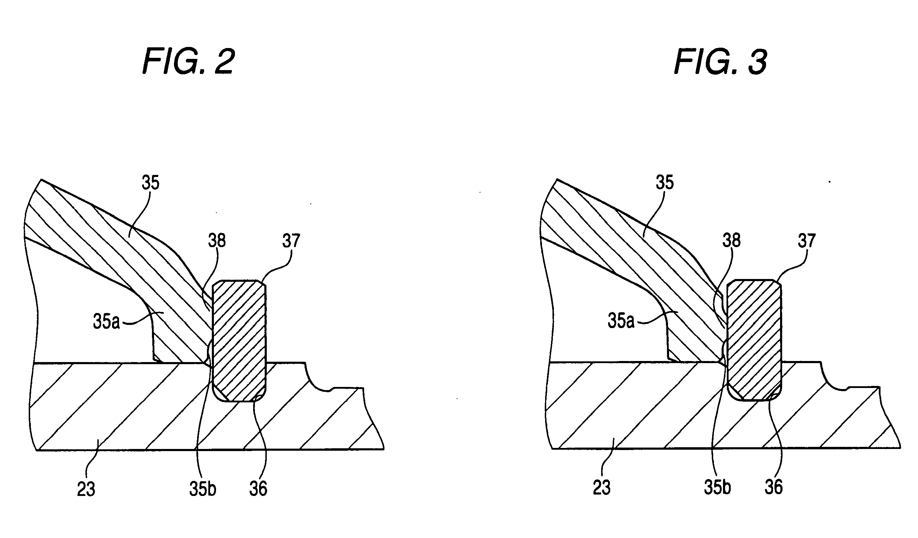

In accordance with one or more embodiments of the present invention, a continuously variable transmission is provided with: a fixed pulley (e.g., a fixed pulley 28 in Fig. 1) formed integrally with a rotating shaft (e.g., a secondary shaft 23 in Fig. 1); a movable pulley (e.g., a movable pulley 29 in Fig. 1) disposed on the rotating shaft in such a manner as to oppose the fixed pulley and to be axially movable; a plunger (e.g., a plunger 35 in Fig. 1) disposed on the rotating shaft in such a manner as to be axially movable and making up an actuator together with the movable pulley; and a stopper member (e.g., a cotter 37 in Fig. 1) fitted in a groove (e.g., a circumferential groove 36 in Fig. 1) provided in the rotating shaft to restrict the axial movement of the plunger, the movement of the movable pulley being controlled by the actuator. In the continuously variable transmission, one of portions of contact (e.g., a surface portion 35b in Fig. 1) between the stopper member and the plunger is provided with an elevated portion (e.g., an elevated portion 38 having a stepped shape in Fig.2 or the elevated portion 38 having a protruding shape in Fig. 3) for controlling a position of a portion of application of one of a force which is applied from the stopper member to the plunger and a force which is applied from the plunger to the stopper member at the portion of contact.

Namely, in the continuously variable transmission in accordance with one or more embodiments of the present invention, the elevated portion is provided on either the stopper member or the plunger at a portion of contact between the stopper member and the plunger, and the position of a point of application of a force applied from the stopper member to the plunger or a force applied from the plunger to the stopper member is controlled by the elevated portion, thereby controlling (reducing the magnitude of a bending moment or ensuring such that the magnitude of the bending moment becomes substantially fixed) the magnitude of a bending moment occurring in a required portion of the plunger (i.e., an inside portion 35a in Fig. 1).

In addition, in accordance with one or more embodiments of the present invention, the elevated portion may be one which has one of a stepped shape and a protruding shape and is provided on one of the portions of contact between the plunger and the stopper member.

In accordance with one or more embodiments of the present invention, an elevated portion is provided on either the stopper member or the plunger at a portion of contact between the stopper member and the plunger, so as to control the portion of application of a force applied from the stopper member to the plunger or a force applied from the plunger to the stopper member. Furthermore, the elevated portion is formed in a stepped shape or a protruding shape. Therefore, the following advantages are obtained:
(1) The bending moment occurring in the plunger or the stopper member can be controlled (the magnitude of the bending moment is controlled to be small or to a fixed level) in correspondence with such as their shape, rigidity, and the gap between the stopper member and the groove.
(2) It is unnecessary to set the allowable stress value to be greater than is required in the strength design of the plunger and the stopper member. Namely, it is possible to alleviate the stress concentration without an excessive increase in the thickness of the plunger and the stopper member.
(3) The elevated portion makes it possible to absorb the backlash ascribable to the gap between the stopper member and the groove, and there is no possibility of the inner surface of the groove being shaved by the stopper member to enlarge the gap.
(4) The elevated portion can be provided simply by effecting molding by using a mold, and a change in the cost due to the provision of the elevated portion does not occur.
(5) In the case where the plunger and the stopper member are molded by the mold, the elevated portion can be formed at the same time as the molding of the plunger or the stopper member, so that a change in cost does not occur.

Other embodiments and advantages of the invention will be apparent from the following description and the appended claims.
Fig. 1 is a partial cross-sectional view illustrating an essential portion of a continuously variable transmission in accordance with the invention;
Fig. 2 is a partially enlarged cross-sectional view illustrating an example of an elevated portion formed on a plunger shown in Fig. 1;
Fig. 3 is a partially enlarged cross-sectional view illustrating another example of the elevated portion formed on the plunger shown in Fig. 1;
Fig. 4 is an explanatory diagram schematically illustrating a power transmission system of a continuously variable transmission having the continuously variable transmission in accordance with the invention;
Fig. 5 is a partially enlarged cross-sectional view for explaining the problems of a related art; and
Fig. 6 is another partially enlarged cross-sectional view for explaining the problems of a related art.

A continuously variable transmission in accordance with embodiments of the invention will be described with reference to Figs. 1 to 4.

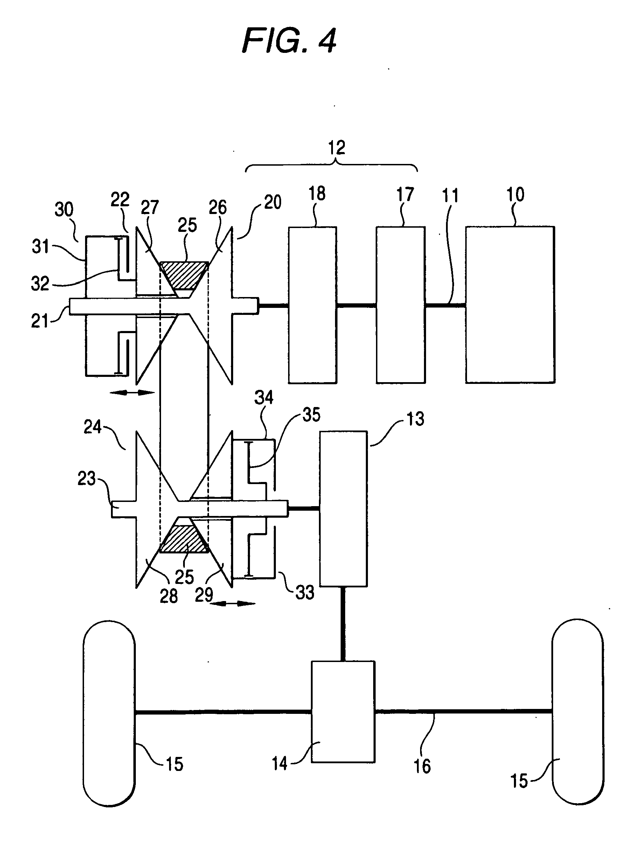

First, referring to Fig. 4, a description will be given of a power transmission system of the continuously variable transmission in accordance with an embodiment. The rotatively driving force of an engine 10 is transmitted from an output shaft 11 to a drive shaft 16 for supporting drive wheels 15 through a continuously variable section 12, a final reduction unit (final gear) 13, a differential gear 14, and the like. The continuously variable section 12 is comprised of a torque converter 17, a forward/reverse changeover unit 18, and a continuously variable transmission 20. The output shaft 11 is coupled to an unillustrated impeller of the torque converter 17, and a turbine of the torque converter 17 is coupled to a planetary input shaft of the forward/reverse changeover unit 18.

The forward/reverse changeover unit 18 has incorporated therein a planetary gear, a forward clutch, a reverse brake, and the like, which are not shown, and when the forward clutch and the reverse brake are both in a released state, the forward/reverse changeover unit 18 is set in a neutral state. Meanwhile, if only the forward clutch is actuated, the planetary gear is integrally rotated to transmit the power from the turbine of the torque converter 17 as it is to the continuously variable transmission 20. Further, if the forward clutch is released, and the reverse brake is actuated, the power from the turbine of the torque converter 17 is transmitted as it is to the continuously variable transmission 20 in a reversely rotated state by means of the planetary gear.

The continuously variable transmission 20 includes a primary pulley 22 disposed on a primary shaft (driving shaft) 21 coupled to the forward/reverse changeover unit 18; a secondary shaft (driven shaft: rotating shaft) 23 coupled to the final reduction unit (final gear) 13; and a drive belt 25 wound around the primary pulley 22 and the secondary pulley 24.

The primary pulley 22 has a truncated cone-shaped fixed pulley 26 formed integrally with the primary shaft 21 and a similarly truncated cone-shaped movable pulley 27 disposed on the primary shaft 21 in such a manner as to oppose this fixed pulley 26 and to be axially movable. A primary hydraulic chamber (actuator) 30 is disposed on the reverse surface side of this movable pulley 27 (on the side not opposing the fixed pulley 26). This primary hydraulic chamber 30 is formed by a cup-shaped cylinder 31 attached to the primary shaft 21 as well as a plunger 32 which is mounted on the movable pulley 27 and moves axially inside the cylinder 31. The primary hydraulic chamber 30 controls the movement of the movable pulley 27 axially on the primary shaft 21 by the oil pressure acting in the primary hydraulic chamber 30. An unillustrated cover having an opening in its center is attached to an open end side of the cylinder 31, and an unillustrated balance chamber for offsetting the centrifugal oil pressure of the primary hydraulic chamber 30 is formed between this cover and the reverse surface side of the plunger 32.

The secondary pulley 24 similarly has a truncated cone-shaped fixed pulley 28 formed integrally with the secondary shaft 23 and a similarly truncated cone-shaped movable pulley 29 disposed on the secondary shaft 23 in such a manner as to oppose this fixed pulley 28 and to be axially movable. A secondary hydraulic chamber (actuator) 33 is disposed on the reverse surface side of this movable pulley 29 (on the side not opposing the fixed pulley 28). The secondary hydraulic chamber 33 is formed by a cup-shaped cylinder 34 provided integrally with the movable pulley 29 as well as a plunger 35 which is mounted on the secondary shaft 23 such that its movement in the axial direction is restricted with respect to the secondary shaft 23 and which relatively moves axially inside the cylinder 34 with respect to the cylinder 34. The secondary hydraulic chamber 33 controls the movement of the movable pulley 29 axially on the secondary shaft 23 by the oil pressure acting in the secondary hydraulic chamber 33. An unillustrated cover having an opening in its center is attached to an open end side of the cylinder 34, and an unillustrated balance chamber for offsetting the centrifugal oil pressure of the secondary hydraulic chamber 33 is formed between this cover and the reverse surface side of the plunger 35.

Line pressure in which the delivery pressure of an unillustrated pump has been adjusted is supplied to the secondary hydraulic chamber 33, and primary pressure in which the line pressure is reduced is supplied to the primary hydraulic chamber 30. By the oil pressure of the working oil supplied to the secondary hydraulic chamber 33 and the primary hydraulic chamber 30, tension which is necessary for torque transmission is imparted to the drive belt 25 through the movable pulleys 27 and 29. The gear ratio is controlled by making variable the width of a V-pulley groove between the primary pulley 22 and the secondary pulley 24 (the wraparound diameter of the drive belt 25).

In this embodiment, a stopper structure in accordance with the invention is disposed in the secondary pulley 24.

Hereafter, referring to Figs. 1 to 3, a detailed description will be given of this stopper structure.

As shown in Fig. 1, the secondary shaft 23 is supported at its one end portion by a bearing 40 and at its other end portion by a bearing 41 in such a manner as to be rotatable in parallel with the above-mentioned primary shaft 21. A circumferential groove 36 is formed in an outer peripheral surface of the secondary shaft 23 at a position close to the other end portion which is supported by the bearing 41 and where the plunger 35 is disposed. A cotter 37 which is formed by a pair of semicircular arc-shaped ring members is fitted in this circumferential groove 36 as a stopper member. This cotter 37 is set to a substantially identical thickness to the groove width of the circular groove 36, and restricts the plunger 35 from moving toward the other end portion side of the secondary shaft 23 by abutting against the plunger 35. It should be noted that working oil is supplied to the secondary hydraulic chamber 33 through an oil hole formed in the secondary shaft 23 and an oil hole 44 formed in the movable pulley 29.

As shown in Fig. 2 or 3, an elevated portion 38 having a flat distal end is formed on a surface portion 35b which is on an inside portion 35a side of the plunger 35 and on the side which abuts against the cotter 37. This elevated portion 38 controls the portion of contact between the plunger 35 and the cotter 37, and is formed, for example, in a stepped shape, as shown in Fig. 2, or in a protruding shape, as shown in Fig. 3, when the plunger 35 is molded.

Even if the cotter 37 is tilted (is swung) in the circumferential groove 36 due to a force (load) from the plunger 35 which received the oil pressure of the working oil supplied to the secondary hydraulic chamber 33 through oil holes 43 and 44, the elevated portion 38 is capable of controlling the portion of contact between the plunger 35 and the cotter 37 to a substantially fixed position.

Namely, even if the cotter 37 is tilted (is swung) in the circumferential groove 36, this tilt (swinging motion) is made small, because not the entire surface portion 35b of the plunger 35 is brought into contact with the cotter 37, and a relatively limited, narrow area is brought into contact with the cotter 37 through the elevated portion 38, and because the backlash ascribable to the gap between the cotter 37 and the circumferential groove 36 is minimized as the elevated portion 38 presses the cotter 37 against one wall surface of the circumferential groove 36. Thus, it is ensured that the portion of contact between the plunger 35 and the cotter 37 does not change greatly (see the two-dot chain lines in Figs. 5 and 6) depending on the tilting direction and the degree of tilt of the cotter 37, thereby controlling the contact portion to a substantially fixed position.

Accordingly, by means of the shape and the position of formation of the elevated portion 38, the portion of contact between the plunger 35 and the cotter 37 can be controlled such that the bending moment occurring in the inside portion 35a of the plunger 35 becomes as small as possible, or the portion of contact between the plunger 35 and the cotter 37 can maintained to a substantially fixed position so that the magnitude of the bending moment does not change depending on the tilting direction and degree of the cotter 37. For this reason, it becomes unnecessary to set allowable stress values larger than required in the strength design of the plunger 35 and the cotter 37. In addition, it becomes possible to alleviate the stress concentration due to the bending moment without increasing the thickness of the plunger 35 and the cotter 37. Further, since the cotter 37 is pressed against one inner wall of the circumferential groove 36 by the elevated portion 38, anditstilt (swingingmotion) is thereby suppressed, there is no possibility of the gap between the cotter 37 and the circumferential groove 36 become enlarged as the circumferential groove 36 is shaved by the cotter by the repeated tiling (swinging) of the cotter 37 in the circumferential groove 36.

For example, in a case where the elevated portion 38 is formed over about a half portion of the surface portion 35b of the plunger 35 (contact is made at a portion distant from the portion of the cotter 37 fitted in the circumferential groove 36), as shown in Fig. 2, the load (pressing force) is applied from the plunger 35 to the cotter 37 in a state of a substantially uniformly distributed load, so that the cotter 37 can be pressed against one inner wall of the circumferential groove 36 in a stable state. Consequently, the backlash (tilting of the cotter 37) between the cotter 37 and the circumferential groove 36 can be minimized as practically as possible.

In addition, in a case where the elevated portion 38 is formed on a central portion of the surface portion 35b of the plunger 35, as shown in Fig. 2, the load is not applied from the plunger 35 to the cotter 37 at its portion which is most distant from its portion fitted in the circumferential groove 36 (the portion constituting a fulcrum of the bending moment occurring in the cotter 37). Thus, it is possible to make small the bending moment occurring in the cotter 37 with the fitting portion between the cotter 37 and the circumferential groove 36 serving as a fulcrum, and the thickness of the cotter 37 need not be enlarged more than is necessary in order to withstand the load applied from the plunger 35.

According to the stopper structure in accordance with the above-described embodiment, as compared with the case where a stopper structure for the plunger 35 is formed by forming a threaded groove on the other end portion side of the secondary shaft 23 and causing a nut to threadedly engage this threaded groove, machining is simple, and the assembly management is facilitated since the continuously variable transmission 20 can be assembled simply by a simple assembly operation. For this reason, it becomes possible to substantially reduce the machining and assembly costs, and set the axial length to a short dimension. Furthermore, as compared with the case in which the stopper structure for the plunger 35 is formed by simply fitting the cotter 37 into the circumferential groove 36, it is possible to control the bending moment occurring in the plunger 35 (control the magnitude of the bending moment to a small level or to a substantially fixed level). In addition, it becomes unnecessary to set an allowable stress value larger than required in the strength design of the plunger 35. In addition, it becomes possible to absorb the backlash ascribable to the gap between the cotter 37 and the circumferential groove 36, and there is no possibility of the circumferential groove 36 being shaved by the cotter 37 to enlarge the gap.

It should be noted that although in the above-described embodiment a case is shown in which the elevated portion 38 is provided on the plunger 35, the invention is not limited to the same, and the elevated portion 38 may be provided on the surface of the cotter 37 which comes into contact with the plunger 35.

In addition, the shape of the elevated portion 38 is not limited to the one shown in Fig. 2 or 3, and the elevated portion 38 may be formed in a substantially semispherical shape. In this case, however, the contact area between the plunger 35 and the cotter 37 is small. Therefore, in the case where the cotter 37 is pressed against one of the inner surfaces of the circumferential groove 36 by the load from the plunger 35, it becomes necessary to devise such a measure as to make it possible to press the cotter 37 in a stable state, e.g., by forming the elevated portion 38 so that the pressing force is applied to the central portion of the cotter, or by pressing the cotter 37 by a plurality of elevated portions 38.

In addition, although a case has been shown in which the invention is applied to the secondary pulley 24, it goes without saying that the invention is applicable to the primary pulley 22 if the construction of the primary hydraulic chamber 30 of the primary pulley 22 has become like the construction of the secondary hydraulic chamber 33.

It will be apparent to those skilled in the art that various modifications and variations can be made to the described preferred embodiments of the present invention without departing from the spirit or scope of the invention. Thus, it is intended that the present invention cover all modifications and variations of this invention consistent with the scope of the appended claims.

## Claims

1. A continuously variable transmission comprising:
a fixed pulley (26, 28) formed integrally with a rotating shaft (23);
a movable pulley (27, 29) opposed to the fixed pulley (26, 28) and axially movable on the rotating shaft (23);
a plunger (35) axially movable on the rotating shaft (23);
an actuator (30), for actuating the movable pulley (27, 29) disposed between the movable pulley (27, 29) and the plunger (35);
a stopper member (37), for restricting the axial movement of the plunger (35), fitted in a groove (36) provided in the rotating shaft (23); and
an elevated portion (38) provided on one of the stopper member (37) and the plunger (35) at a contact between the stopper member (37) and the plunger (35),
**characterized in that** the elevated portion (38) has a stepped shape or a protruding shape.

2. The continuously variable transmission according to claim 1, wherein the elevated portion (38) controls a position of a portion of application of one of a force which is applied from the stopper member (37) to the plunger (35) and a force which is applied from the plunger (35) to the stopper member (37).

3. The continuously variable transmission according to claim 1 or 2, wherein the elevated portion (38) is formed on the stopper member (37).

4. The continuously variable transmission according to any one of claims 1 to 3, wherein the elevated portion (38) is formed on the plunger (35).

5. The continuously variable transmission according to one of claims 1 to 4, wherein the elevated portion (38) has a flat distal end.

6. The continuously variable transmission according to one of claims 1 to 5, wherein the elevated portion (38) has a substantially semispherical shape

## Patentansprüche

1. Stufenlos regelbares Getriebe mit:
einer festen Rolle (26, 28), die mit einer Rotationswelle (23) verbunden ist;
einer beweglichen Rolle (27, 29), die der festen Rolle (26, 28) gegenüberliegt und axial auf der Rotationswelle (23) beweglich ist;
einem Kolben (35), der axial auf der Rotationswelle (23) beweglich ist;
einem Aktuator (30) zum Bewegen der beweglichen Rolle (27, 29), der zwischen der beweglichen Rolle (27, 29) und dem Kolben (35) angeordnet ist;
einem Anschlag (37) zum Beschränken der axialen Bewegung des Kolbens (35), der in eine Nut (36) der Rotationswelle (23) eingepasst ist; und
einem Vorsprung (38) an dem Anschlag (37) oder an dem Kolben (35) an einem Kontakt zwischen dem Anschlag (37) und dem Kolben (35),
**dadurch gekennzeichnet, dass** der Vorsprung (38) eine gestufte Form oder eine vorstehende Form hat.

2. Stufenlos regelbares Getriebe nach Anspruch 1, wobei der Vorsprung (38) die Position des einen Angriffsabschnitts der Kraft, die durch den Anschlag (37) auf den Kolben (35) ausgeübt wird, oder der Kraft, die durch den Kolben (35) auf den Anschlag (37) ausgeübt wird, kontrolliert.

3. Stufenlos regelbares Getriebe nach Anspruch 1 oder 2, wobei der Vorsprung (38) auf dem Anschlag (37) ausgebildet ist.

4. Stufenlos regelbares Getriebe nach einem der Ansprüche 1 bis 3, wobei der Vorsprung (38) auf dem Kolben (35) ausgebildet ist.

5. Stufenlos regelbares Getriebe nach einem der Ansprüche 1 bis 4, wobei der Vorsprung (38) ein flaches Distalende aufweist.

6. Stufenlos regelbares Getriebe nach einem der Ansprüche 1 bis 5, wobei der Vorsprung (38) eine im Wesentlichen halbkugelförmige Form aufweist.

## Revendications

1. Transmission à variation continue comprenant :
une poulie fixe (26, 28) formée d'un seul tenant avec un arbre de rotation (23),
une poulie mobile (27, 29) opposée à la poulie fixe (26, 28) et axialement mobile sur l'arbre de rotation (23),
un plongeur (35) axialement mobile sur l'arbre de rotation (23),
un actionneur (30), destiné à actionner la poulie mobile (27, 29), disposé entre la poulie mobile (27, 29) et le plongeur (35),
un élément d'arrêt (37) destiné à limiter le mouvement axial du plongeur (35), inséré dans une gorge (36) prévue sur l'arbre de rotation (23), et
une partie surélevée (38) prévue sur un parmi l'élément d'arrêt (37) et le plongeur (35) au niveau d'un contact entre l'élément d'arrêt (37) et le plongeur (35),
**caractérisée en ce que** la partie surélevée (38) a une forme en gradin ou une forme en saillie.

2. Transmission à variation continue selon la revendication 1, dans laquelle la partie surélevée (38) contrôle une position d'une partie d'application d'une parmi une force qui est appliquée par l'élément d'arrêt (37) sur le plongeur (35) et une force qui est appliquée par le plongeur (35) sur l'élément d'arrêt (37).

3. Transmission à variation continue selon la revendication 1 ou 2, dans laquelle la partie surélevée (38) est formée sur l'élément d'arrêt (37).

4. Transmission à variation continue selon l'une des revendications 1 à 3, dans laquelle la partie surélevée (38) est formée sur le plongeur (35).

5. Transmission à variation continue selon l'une des revendications 1 à 4, dans laquelle la partie surélevée (38) a une extrémité distale plate.

6. Transmission à variation continue selon l'une des revendications 1 à 5, dans laquelle la partie surélevée (38) a une forme sensiblement demi-sphérique.
